# EUROPÄISCHE PATENTANMELDUNG

(11) **EP 4 101 701 A1**
(43) Veröffentlichungstag der Anmeldung: **14.12.2022**
(21) Anmeldenummer: 21177916.0
(22) Anmeldetag: 07.06.2021
(51) Int. Cl.: B60R 11/02, B62J 11/00, F16M 11/04

(54) **HALTESYSTEM ZUR LÖSBAREN BEFESTIGUNG EINES MOBILEN ENDGERÄTS ODER DERGLEICHEN AN EINEM FAHRZEUG**

(71) Anmelder: motogadget GmbH, 10997 Berlin (DE)
(72) Erfinder: Keller, Garrit, 10997 Berlin (DE)
(74) Vertreter: Wörz, Volker Alfred

(57) **Zusammenfassung**

Die Erfindung betrifft ein Haltesystem (10) zur lösbaren Befestigung eines mobilen Endgeräts an einem Fahrzeug. Das Haltesystem (10) umfasst eine Haltevorrichtung (20) zur lösbaren Befestigung an dem Endgerät und eine Befestigungsvorrichtung (22) zur Befestigung der Haltevorrichtung (20) an dem Fahrzeug. Die Haltevorrichtung (20) kann mit einem dem Endgerät zugeordneten Aufnahmeabschnitt (16) lösbar in Eingriff treten. Die lösbare Befestigung des Endgeräts an der Haltevorrichtung (20) ist durch Drehen des Aufnahmeabschnitts (16) relativ zu der Haltevorrichtung (20) in einer Drehebene zwischen einer Freigabeposition, in der der Aufnahmeabschnitt (16) in einer Einsetzrichtung (36) auf die Haltevorrichtung (20) aufsetzbar oder in entgegengesetzter Richtung (38) von dieser abnehmbar ist, und einer Rastposition umschaltbar, in der der Aufnahmeabschnitt (16) mit der Haltevorrichtung (20) in Eingriff tritt. Die Haltevorrichtung (20) umfasst ein an der Befestigungsvorrichtung (22) drehfest befestigtes Rastelement (40) mit mindestens zwei radial nach außen abstehenden und sich in der Drehebene erstreckenden Rastlaschen (42), und ein an der Befestigungsvorrichtung (22) drehbar befestigtes Abdeckelement (44), das eine Abdeckfläche (46) mit einer Außenkontur (48) aufweist. Das Abdeckelement (44) ist bei auf die Haltevorrichtung (20) aufgesetztem Aufnahmeabschnitt (16) zusammen mit dem Endgerät in der Drehebene zwischen einer Freigabeposition, in der die Abdeckfläche (46) des Abdeckelements (44) die Rastlaschen (42) des Rastelements (40) verdeckt, und einer Rastposition drehbar, in der das Abdeckelement (44) die Rastlaschen (42) des Rastelements (40) freigibt.

## Beschreibung

Die vorliegende Erfindung betrifft ein Haltesystem zur lösbaren Befestigung eines mobilen Endgeräts, einer Tasche oder dergleichen an einem Fahrzeug. Das Haltesystem umfasst eine Haltevorrichtung zur lösbaren Befestigung an dem Endgerät, der Tasche oder dergleichen und eine Befestigungsvorrichtung zur vorzugsweise lösbaren Befestigung der Haltevorrichtung an einem Bauteil des Fahrzeugs. Die Haltevorrichtung ist ausgebildet, mit einem dem Endgerät, der Tasche oder dergleichen zugeordneten Aufnahmeabschnitt lösbar in Eingriff zu treten. Die lösbare Befestigung des Endgeräts, der Tasche oder dergleichen an der Haltevorrichtung kann durch Drehen des dem Endgerät, der Tasche oder dergleichen zugeordneten Aufnahmeabschnitts relativ zu der Haltevorrichtung in einer Drehebene umgeschaltet werden. Dabei kann die lösbare Befestigung zwischen einer Freigabeposition, in der der Aufnahmeabschnitt in einer Einsetzrichtung senkrecht zu der Drehebene auf die Haltevorrichtung aufgesetzt oder von dieser abgehoben werden kann, und einer Rastposition umgeschaltet werden, in der der Aufnahmeabschnitt mit der Haltevorrichtung in Eingriff treten kann.

Ferner umfasst die Erfindung einen Aufnahmeabschnitt, der einem mobilen Endgerät, einer Tasche oder dergleichen zugeordnet und zum Zusammenwirken mit einem Haltesystem zur lösbaren Befestigung des mobilen Endgeräts, der Tasche oder dergleichen an einem Fahrzeug ausgebildet ist, um das Endgerät, die Tasche oder dergleichen lösbar an einem Bauteil des Fahrzeugs zu befestigen.

Derartige Haltesysteme für mobile Endgeräte sind in unterschiedlichen Ausgestaltungen aus dem Stand der Technik bekannt. Die gängigsten Systeme sind
- QuadLock der Annex Products Pty Ltd, AU,
- SP Connect der SP United Vertriebs GmbH, AT,
- M4 Bike Kit der Morpheus Labs, SG.

Die mobilen Endgeräte, die mittels des Haltesystems an einem beliebigen Bauteil eines Fahrzeugs lösbar befestigt werden können, umfassen bspw. Mobiltelefone, insbesondere Smartphones, Tablet-PCs, Navigationssysteme, Foto- oder Filmkameras (z.B. GoPro) oder ähnliches.

Die Haltesysteme umfassen in der Regel eine Haltevorrichtung zur lösbaren Befestigung an dem mobilen Endgerät und eine Befestigungsvorrichtung zur vorzugsweise lösbaren Befestigung der Haltevorrichtung an einem Bauteil des Fahrzeugs. Dabei kann die Befestigungsvorrichtung an einer Lenkstange, an einem Lenkervorbau, auf einem Armaturenbrett, auf einer Mittelkonsole, in Rippen eines Luftauslasses einer Fahrzeugheizung oder an einem sonstigen Bauteil eines Fahrzeugs befestigt werden. Die Befestigungsvorrichtung kann eine Schraubschelle oder eine Schraubklemme zur Befestigung an einer Lenkstange, eine Klebefläche zur Befestigung auf glatten, ebenen Flächen oder sonstige Befestigungsmittel zur Befestigung der Befestigungsvorrichtung an dem beliebigen Bauteil eines Fahrzeugs aufweisen. Das Fahrzeug kann ein beliebiges Fahrzeug mit oder ohne motorische Unterstützung sein, insbesondere ein Zweirad (z.B. Fahrrad, Leichtkraftrad, Motorrad), ein Dreirad (z.B. Trike) oder ein Vierrad (z.B. Quad oder Auto).

Die Haltevorrichtung stellt gewissermaßen eine mechanische Schnittstelle zwischen der Befestigungsvorrichtung und dem Endgerät bzw. einem dem Endgerät zugeordneten Bauteil dar. Aus dem Stand der Technik sind Hüllen für mobile Endgeräte mit einem Aufnahmeabschnitt bekannt, der ausgebildet ist, mit der Haltevorrichtung selektiv in Eingriff zu treten, sodass die Handyhülle zusammen mit dem Endgerät auf die Haltevorrichtung aufgesetzt und daran festgelegt oder aber von der Haltevorrichtung gelöst und davon abgehoben werden kann. Auf diese Weise kann durch die bekannten Haltesysteme eine lösbare Befestigung eines mobilen Endgeräts an einem Bauteil eines Fahrzeugs realisiert werden.

Im Stand der Technik ist es bekannt, das Endgerät bzw. den zugeordneten Aufnahmeabschnitt auf die Haltevorrichtung aufzusetzen und den Aufnahmeabschnitt zusammen mit dem Endgerät in einer Drehebene relativ zu dem Haltesystem bzw. zu der Haltevorrichtung zu drehen, um das Endgerät an dem Haltesystem zu halten. Die Drehebene verläuft bevorzugt parallel zu einer Flächenerstreckung eines Bildschirms des Endgeräts. Dabei wird das Endgerät bzw. der dem Endgerät zugeordnete Aufnahmeabschnitt zwischen einer Freigabeposition, in der der Aufnahmeabschnitt in einer Einsetzrichtung senkrecht zu einer Drehebene auf die Haltevorrichtung aufgesetzt oder von dieser abgehoben werden kann, und einer Rastposition umgeschaltet, in der der Aufnahmeabschnitt mit der Haltevorrichtung in Eingriff treten kann. Der Drehwinkel zwischen der Freigabeposition und der Rastposition beträgt bspw. 45° oder 90°.

Die Haltesysteme werden überwiegend an Lenkstangen von zwei-, drei- oder vierrädrigen Fahrzeugen eingesetzt. Damit sind sie den Witterungen (z.B. Sonne, Regen, Schnee und Hagel) sowie Verschmutzung und mechanischen Belastungen ausgesetzt. Aus diesem Grund sollten das Haltesystem und insbesondere die Haltevorrichtung, welche die Schnittstelle zu dem mobilen Endgerät bildet, möglichst robust gegenüber Witterungen und mechanischen Belastungen und möglichst resistent gegen Verschmutzung sein. Vertiefungen und ungeschützte filigrane, bewegliche Teile an der Haltevorrichtung sind besonders anfällig für mechanische Belastungen und Verschmutzung. Dies kann zu Schwergängigkeit und sogar zu einer Fehlfunktion der Haltevorrichtung und damit des gesamten Haltesystems führen. Andererseits sollte der dem Endgerät zugeordnete Aufnahmeabschnitt, der mit der Haltevorrichtung des Haltesystems in Eingriff treten kann, möglichst frei von beweglichen Teilen und so flach wie möglich ausgebildet sein. Das bedeutet, dass die beweglichen Teile nach Möglichkeit Bestandteil der Haltevorrichtung sein sollten, wo sie jedoch wiederum Gefahr laufen durch Witterung oder mechanische Belastung beschädigt oder durch Staub, Sand, Steine, Feuchtigkeit, Öl, Benzin o.ä. verschmutzt zu werden. Umso wichtiger ist es, das Haltesystem so auszugestalten, dass es robust gegenüber Witterungen und mechanischen Belastungen und möglichst resistent gegen Verschmutzung ist.

Zur Lösung dieser Aufgabe wird ein Haltesystem mit den Merkmalen des Anspruchs 1 vorgeschlagen. Insbesondere wird ausgehend von dem Haltesystem der eingangs genannten Art vorgeschlagen, dass die Haltevorrichtung umfasst:
ein an der Befestigungsvorrichtung drehfest befestigtes Rastelement mit mindestens zwei radial nach außen abstehenden und sich in der Drehebene erstreckenden Rastlaschen, und
ein an der Befestigungsvorrichtung drehbar befestigtes Abdeckelement, das eine sich in der Drehebene erstreckende Abdeckfläche mit einer Außenkontur aufweist, wobei
das Abdeckelement bei auf die Haltevorrichtung aufgesetztem Aufnahmeabschnitt zusammen mit dem Endgerät, der Tasche oder dergleichen in der Drehebene drehbar ist, insbesondere zwischen der Freigabeposition und der Rastposition, wobei
in der Freigabeposition die Abdeckfläche des Abdeckelements, bei einem Blick auf das Abdeckelement im Wesentlichen senkrecht zu der Drehebene, die Rastlaschen des Rastelements zumindest größtenteils verdeckt und
in der Rastposition das Abdeckelement die Rastlaschen des Rastelements zumindest teilweise freigibt, sodass, bei einem Blick auf das Abdeckelement im Wesentlichen senkrecht zu der Drehebene, die Rastlaschen in radialer Richtung weiter über die Außenkontur der Abdeckfläche des Abdeckelements hervorragen als in der Freigabeposition.

Selbstverständlich könnte der Aufnahmeabschnitt auch einer Tasche zugeordnet sein, die bspw. zur Aufnahme eines mobilen Endgeräts und/oder anderer persönlicher Gegenstände (z.B. Landkarten, Geldbörse, Ausweise, Schlüssel, Mund-Nase-Schutz etc.) ausgebildet ist. Somit könnten mittels des Haltesystems auch einfach nur eine Tasche ohne Endgerät an einem Fahrzeug befestigt werden. Wenn nachfolgend von einem Endgerät die Rede ist, ist immer auch inhärent eine Tasche, eine Akkuleuchte oder dergleichen gemeint, selbst wenn dies nicht ausdrücklich erwähnt ist. Das, was für das Endgerät und dessen Befestigung an einem Fahrzeug mittels des erfindungsgemäßen Haltesystems gilt, gilt genauso für die Befestigung einer Tasche, einer Akkuleuchte oder dergleichen an einem Fahrzeug mittels des erfindungsgemäßen Haltesystems.

Besonders vorteilhaft ist dabei, dass das Abdeckelement beweglich ausgestaltet ist und nicht das Rastelement mit seinen Rastlaschen. Die sichere und zuverlässige Befestigung des Endgeräts an dem Haltesystem wird durch ein Zusammenwirken des Rastelements bzw. der Rastlaschen mit dem dem Endgerät, der Tasche oder dergleichen zugeordneten Aufnahmeabschnitt erreicht. Des Abdeckelements bedarf es zur lösbaren Befestigung des Endgeräts, der Tasche oder dergleichen nicht.

Ein weiterer Vorteil besteht darin, dass das Abdeckelement in der Freigabeposition das Rastelement größtenteils, bevorzugt vollständig verdeckt, so dass bei einem Blick eines Betrachters auf das Abdeckelement in einer Richtung senkrecht zu der Drehebene das Rastelement größtenteils, im Idealfall sogar vollständig verdeckt ist. Somit ist das Rastelement mit den Rastlaschen vor Witterung, mechanischer Belastung und Verschmutzung geschützt. Erst wenn das Rastelement zur lösbaren Befestigung des Endgeräts, der Tasche oder dergleichen in der Rastposition benötigt wird, dreht das Abdeckelement in der Drehebene und gibt einen größeren Teil des Rastelements bzw. der Rastlaschen frei als zuvor in der Freigabeposition.

Das Drehen des Abdeckelements erfolgt, wenn das Endgerät, die Tasche oder dergleichen bzw. der zugeordnete Aufnahmeabschnitt auf die Haltevorrichtung bzw. auf das Abdeckelement aufgesetzt ist. Somit gibt zwar das Abdeckelement in der Rastposition das Rastelement frei, das Rastelement ist aber nach wie vor vor Witterung, Beschädigung und Verschmutzung geschützt, da der Aufnahmeabschnitt bzw. das Endgerät, die Tasche oder dergleichen einen Zugriff auf das Rastelement und die Rastlaschen von außerhalb unterbinden.

In der Rastposition treten bevorzugt das Rastelement bzw. dessen Rastlaschen mit dem dem Endgerät, der Tasche oder dergleichen zugeordneten Aufnahmeabschnitt in Eingriff, um das Endgerät, die Tasche oder dergleichen lösbar an dem Haltesystem zu halten. Es ist denkbar, dass an dem Haltesystem und/oder an dem Aufnahmeabschnitt des Endgeräts Sicherungsmittel vorgesehen sind, die das Endgerät in der Rastposition an dem Haltesystem sichern und ein unbeabsichtigtes Lösen des Endgeräts von dem Haltesystem verhindern. Durch Drehen des Endgeräts bzw. des Aufnahmeabschnitts in der Drehebene in die Freigabeposition wird der Eingriff zwischen dem Rastelement bzw. den Rastlaschen und dem Aufnahmeabschnitt wieder gelöst und das Endgerät, die Tasche oder dergleichen kann von dem Haltesystem abgehoben werden. Falls Sicherungsmittel vorhanden sind, müssten diese zunächst gelöst werden, bevor das Endgerät aus der Rastposition herausbewegt werden kann. Bevorzugt ist es jedoch, wenn das Rastelement die Rastposition zwischen Endgerät bzw. Aufnahmeabschnitt und Haltesystem bzw. Haltevorrichtung ausreichend zuverlässig halten kann und somit auf Sicherungsmittel verzichtet werden kann.

Das äußere Erscheinungsbild der Haltevorrichtung des Haltesystems wird durch die Form und Ausgestaltung des Abdeckelements, insbesondere durch die Außenkontur der Abdeckfläche, bestimmt. Dies erlaubt die Ausgestaltung eines besonders schlichten und optisch ansprechenden Haltesystems, das zudem ein durch die Form und Ausgestaltung des Abdeckelements bestimmtes charakteristisches Erscheinungsbild hat.

Gemäß einer vorteilhaften Weiterbildung der Erfindung wird vorgeschlagen, dass das Abdeckelement entlang der Außenkontur seiner Abdeckfläche eine sich im Wesentlichen senkrecht zur Abdeckfläche erstreckende Außenumfangsfläche mit seitlichen Aussparungen aufweist, die derart ausgebildet und in der Außenumfangsfläche angeordnet sind, dass die Rastlaschen in der Rastposition zumindest teilweise durch die Aussparungen des Abdeckelements hindurch über die Außenkontur der Abdeckfläche hervorragen.

In der Freigabeposition ist das Rastelement bzw. sind die Rastlaschen des Rastelements vorzugsweise unter der Abdeckfläche des Abdeckelements und hinter der Außenumfangsfläche versteckt. Dies hat den Vorteil, dass das Rastelement nicht nur von oben, d.h. senkrecht zur Drehebene vor Witterung, mechanischer Belastung und Verschmutzung, sondern auch größtenteils von der Seite her geschützt ist. Die Aussparungen in der Außenumfangsfläche des Abdeckelements sind bevorzugt nur so groß ausgebildet, dass die Rastlaschen beim Übergang von der Freigabeposition in die Rastposition aus dem Inneren des Abdeckelements durch die Aussparungen nach außen über die Außenkontur hinausgelangen können. Dies geschieht - wie gesagt - nicht durch eine Bewegung des Rastelements, sondern durch eine Drehung des Abdeckelements in der Drehebene relativ zu dem feststehenden Rastelement.

Vorteilhafterweise ist das Abdeckelement derart ausgebildet, dass es in der Freigabeposition die Rastlaschen des Rastelements vollständig verdeckt, so dass sie für einen Betrachter bei einem Blick von außerhalb der Haltevorrichtung senkrecht zur Drehebene nicht sichtbar sind.

Gemäß einer bevorzugten Ausführungsform der Erfindung wird vorgeschlagen, dass die Rastlaschen ausgebildet sind, in der Rastposition mit dem dem Endgerät, der Tasche oder dergleichen zugeordneten Aufnahmeabschnitt in Eingriff zu treten, wobei das Endgerät, die Tasche oder dergleichen durch diesen Eingriff an der Haltevorrichtung gehalten ist. Das Abdeckelement wird in einer Freigabeposition von dem Aufnahmeabschnitt formschlüssig aufgenommen und während des Übergangs in eine Rastposition zusammen mit dem Aufnahmeabschnitt und dem zugeordneten Endgerät in der Drehebene gedreht. Durch die Drehung verändert sich also nicht nur die Drehposition des Abdeckelements relativ zu dem Rastelement bzw. den Rastlaschen, sondern auch die Drehposition des Aufnahmeabschnitts des Endgeräts relativ zu dem Rastelement bzw. den Rastlaschen. In der Rastposition steht der Aufnahmeabschnitt mit den Rastlaschen des Rastelements in Eingriff.

Der dem Endgerät, der Tasche oder dergleichen zugeordnete Aufnahmeabschnitt weist vorteilhafterweise eine Aufnahmevertiefung zur Aufnahme des Abdeckelements in der Freigabeposition und in der Aufnahmevertiefung sich in radialer Richtung erstreckende Taschen auf, wobei die Rastlaschen des Rastelements in der Rastposition die Taschen hintergreifen. Zwischen den Taschen der Aufnahmevertiefung sind Aufnahmeabschnitte ausgebildet, durch die die Rastlaschen in der Freigabeposition in einer Richtung senkrecht zu der Drehebene in die Aufnahmevertiefung eintreten können. Die Taschen sind bevorzugt als Hinterschneidungen ausgebildet, sodass ein Drehen des Aufnahmeabschnitts relativ zu dem Rastelement dazu führt, dass die Rastlaschen in Drehrichtung hinter die Taschen eintreten und diese hintergreifen. In diesem Sinn ist es vorteilhaft, wenn die Taschen zumindest in einer Drehrichtung offen sind.

Vorzugsweise sind den Taschen des Aufnahmeabschnitts jeweils eine Anlauframpe oder Anlaufschräge zugeordnet, auf der die Rastlaschen beim Übergang von der Freigabeposition in die Rastposition entlanggleiten und gleichzeitig in Richtung der Abdeckfläche des Abdeckelements angehoben werden. Das Anheben der Rastlaschen ist möglich, da das Rastelement bevorzugt aus einem federnd elastischen Material, bspw. einem Metallblech, gefertigt ist. Am Ende der Anlauframpen oder Anlaufschrägen sind in dem Aufnahmeabschnitt Mulden zur Aufnahme der Rastlaschen in der Rastposition ausgebildet. Die Position der Mulden entspricht somit der Rastposition der lösbaren Befestigung. Beim Erreichen der Rastposition am Ende der Anlauframpen schnappen die Rastlaschen aufgrund ihrer Federwirkung in die Mulden und sind dort formschlüssig und sicher gehalten. Damit ist auch der Aufnahmeabschnitt und das ihm zugeordnete Endgerät sicher in der Rastposition gehalten. Das Erreichen der Rastposition kann durch ein deutlich hörbares Klickgeräusch begleitet werden, wenn die Rastlaschen am Ende der Anlauframpen in die Mulden schnappen.

Die Anlauframpen haben den Vorteil, dass das Haltesystem ohne großen Kraftaufwand von der Freigabeposition in die Rastposition gebracht werden kann, da die Rastlaschen auf den Anlauframpen in die Mulden gleiten können. Andererseits ist eine wesentlich höhere Kraft erforderlich, um das Haltesystem aus der Rastposition in die Freigabeposition zu bewegen, da in dieser Drehrichtung keine oder allenfalls sehr steile Rampen oder Schrägen vorhanden sind, an denen die Rastlaschen aus der Mulde wieder auf die Anlauframpen gehoben werden können.

Bevorzugt weist das Rastelement im Bereich der Rastlaschen einen umgebogenen oder umgebördelten Randabschnitt auf. Durch die Ausgestaltung des Biegeradius der Randabschnitte der Rastlaschen im Vergleich zur Flächenerstreckung des übrigen Rastelements kann die Kraft beeinflusst werden, die erforderlich ist, um die Rastlaschen aus den Mulden heraus zu bewegen und somit das Haltesystem zu lösen, d.h. aus der Rastposition in die Freigabeposition zu bewegen.

Vorzugsweise entspricht die Außenkontur der Abdeckfläche des Abdeckelements einer Innenkontur der Aufnahmevertiefung des Aufnahmeabschnitts. Auf diese Weise kann ein formschlüssiger Eingriff des Aufnahmeabschnitts mit dem Abdeckelement ermöglicht werden, sodass eine Drehung des Endgeräts und damit auch des zugeordneten Aufnahmeabschnitts zu einer gleichzeitigen und zwangsläufigen Drehung des Abdeckelements führt. Damit kann die Aufnahmevertiefung die gleiche charakteristische Form wie die Außenkontur der Abdeckfläche des Abdeckelements haben. Im Inneren der Aufnahmevertiefung sind lediglich noch die Taschen angeordnet, mit denen die Rastlaschen in der Rastposition in Eingriff treten können. Dies ermöglicht eine besonders schlichte, unauffällige, robuste und widerstandsfähige Ausgestaltung des dem mobilen Endgerät zugeordneten Aufnahmeabschnitts.

Gemäß einer anderen vorteilhaften Weiterbildung der Erfindung wird vorgeschlagen, dass das Haltesystem ein an der Befestigungsvorrichtung drehfest befestigtes Federelement aufweist, das während einer Drehbewegung des Abdeckelements mit diesem zusammenwirkt, so dass das Abdeckelement relativ zu dem Rastelement in diskreten Drehpositionen lösbar gehalten ist. Vorteilhaftweise umfassen die diskreten Drehpositionen des Abdeckelements relativ zu dem Rastelement zumindest eine Freigabeposition und eine Rastposition.

Das Federelement sorgt dafür, dass das Abdeckelement und damit auch der darauf aufgesetzte Aufnahmeabschnitt und mit diesem das gesamte mobile Endgerät in der Rastposition gesichert werden. Ein unbeabsichtigtes Verlassen der Rastposition und Lösen des Aufnahmeabschnitts von dem Rastelement kann somit wirksam verhindert werden. Gesondert zu bedienende Sicherungsmittel sind nicht erforderlich. Vielmehr erfüllt das Federelement die Funktion von Sicherungsmitteln und treten automatisch nach Erreichen der Rastposition in Aktion. Erst durch Überwinden relativ hoher Kräfte in Richtung der Drehbewegung von der Rastposition in die Freigabeposition kann die Rastposition verlassen, die Freigabeposition erreicht und der Aufnahmeabschnitt von dem Abdeckelement abgehoben werden.

Um die Anzahl der Bauteile des Haltesystems möglichst gering zu halten, wird vorgeschlagen, dass das Federelement zusammen mit dem Rastelement als ein kombiniertes Bauteil ausgebildet ist. Dieses kombinierte Bauteil erfüllt somit die Funktion des Rastelements und gleichzeitig auch die Funktion des Federelements.

Gemäß einer bevorzugten Ausführungsform der Erfindung wird vorgeschlagen, dass das Federelement eine Flächenerstreckung in der Drehebene aufweist und mindestens eine sich in radialer Richtung erstreckende und quer zur Drehebene wirkende Federlasche aufweist, die mit mindestens einem entsprechenden dem Abdeckelement zugeordneten diskreten Abschnitt zusammenwirkt, wenn sich das Abdeckelement in einer der diskreten Drehpositionen befindet, sodass das Abdeckelement in der diskreten Drehposition lösbar gehalten ist. Über die Anzahl und Ausgestaltung (z.B. Abmessungen und Form) der Federlaschen können die Haltekräfte eingestellt werden, mit denen das Abdeckelement relativ zu dem Rastelement in der oder den diskreten Drehpositionen gehalten ist. Auf diese Weise kann sichergestellt werden, dass das Abdeckelement und damit auch der Aufnahmeabschnitt und das Endgerät sicher und zuverlässig in der Rastposition gehalten sind, ohne dass es zusätzlicher Sicherungsmittel bedarf.

Vorteilhafterweise umfasst das Federelement vier sich in einem Winkel von 90° versetzt zueinander in radialer Richtung erstreckende und quer zur Drehebene wirkende Federlaschen, die mit vier entsprechenden dem Abdeckelement zugeordneten diskreten Abschnitten zusammenwirken, wenn sich das Abdeckelement in einer der diskreten Drehpositionen befindet, und die das Abdeckelement in der diskreten Drehposition lösbar halten. Diese Ausführungsform hat den Vorteil, dass die Haltekräfte zur Sicherung des Abdeckelements in der Rastposition über den gesamten 360° Umfang um eine Drehachse verteilt zwischen dem Federelement und dem Abdeckelement wirken. Selbstverständlich wäre es auch denkbar weniger oder mehr Federlaschen vorzusehen. Wenn bspw. nur zwei Federlaschen vorgesehen sind, sind diese vorzugsweise in einem Winkel von 180° versetzt zueinander angeordnet.

Vorzugsweise umfasst die mindestens eine Federlasche an ihrem distalen Ende einen Rastnocken. Dabei weist der mindestens eine dem Abdeckelement zugeordnete diskrete Abschnitt eine auf einer dem Federelement zugewandten Seite des Abdeckelements ausgebildete Rastvertiefung auf, mit der der Rastnocken in Eingriff tritt, wenn sich das Abdeckelement in einer der diskreten Drehpositionen befindet. In den diskreten Drehpositionen taucht der Rastnocken aufgrund der durch die Federlasche erzeugten Federkraft in die entsprechende Rastvertiefung ganz oder teilweise ein. Der Rastnocken hat vorzugsweise einen runden Querschnitt und eine umlaufende Umfangswand mit einem dem Abdeckelement zugewandten distalen Ende.

Die Umfangswand verläuft bevorzugt nicht senkrecht zu der Abdeckfläche des Abdeckelements, sondern in einem Winkel α relativ zu der Senkrechten, so dass der Rastnocken insgesamt die Form eines Kegelstumpfes hat. Die Umfangswand im Winkel α dient als Anlaufschräge, damit der Rastnocken beim Übergang von der Rastposition in die Freigabeposition die Rastvertiefung einfacher verlassen kann. Über den Winkel α können die Kräfte eingestellt werden, die in Drehrichtung aufgewandt werden müssen, um den Rastnocken aus der Rastvertiefung herauszubewegen und die Rastposition zu verlassen. Der Winkel α liegt bevorzugt im Bereich von 10° bis 45°, vorzugsweise im Bereich von 12° bis 30°, besonders bevorzugt bei etwa 15°.

Das dem Abdeckelement zugewandte distale Ende der umlaufenden Umfangswand hat am Übergang zu der Umfangswand bevorzugt einen Gleitradius von etwa < 1 mm, vorzugsweise von < 0,5 mm, besonders bevorzugt von etwa 0,2 mm.

Gemäß einer anderen vorteilhaften Weiterbildung der Erfindung wird vorgeschlagen, dass das Haltesystem ein Halteelement aufweist, das drehfest an der Befestigungsvorrichtung befestigt ist, wobei das Rastelement und/oder das Federelement an dem Halteelement drehfest befestigt ist. Das Halteelement könnte auch einstückig mit der Befestigungsvorrichtung zur Befestigung der Haltevorrichtung an einem Bauteil des Fahrzeugs ausgebildet sein. Das Halteelement kann als Führung für das Abdeckelement dienen, so dass dieses die Drehbewegung zwischen der Freigabeposition und der Rastposition besser ausführen kann. Die Befestigung des Rastelements und/oder das Federelements an dem Halteelement erfolgt bevorzugt mittels Schrauben.

Gemäß einer bevorzugten Ausführungsform wird vorgeschlagen, dass das Abdeckelement an dem Rastelement und/oder an dem Federelement drehbar befestigt ist. Die drehbare Befestigung des Abdeckelements kann bspw. mittels einer zentralen Schraube und einem Gleitring oder einem Gleitlager erfolgen. Zur Montage der Haltevorrichtung wird zunächst der Gleitring oder das Gleitlager und die zentrale Schraube in das Halteelement eingesetzt und dann das Rast- und/oder Federelement an dem Halteelement festgeschraubt. Dabei sind der Gleitring oder das Gleitlager und die zentrale Schraube zwischen dem Halteelement und dem Rast- und/oder Federelement eingeschlossen. Dann wird das Abdeckelement auf der dem Halteelement abgewandten Seite des Rast- und/oder Federelements aufgesetzt und die zentrale Schraube durch eine zentrale Öffnung in dem Halteelement hindurch an dem Abdeckelement festgeschraubt. Dann wird die montierte Haltevorrichtung an der Befestigungsvorrichtung befestigt, bspw. mittels einer Schraube und einer Rastscheibe, um ein unbeabsichtigtes Verstellen der Haltevorrichtung relativ zu der Befestigungsvorrichtung zu verhindern.

Die der vorliegenden Erfindung zugrundeliegende Aufgabe wird auch durch einen Aufnahmeabschnitt mit den Merkmalen des Anspruchs 15 gelöst. Insbesondere wird ausgehend von dem Aufnahmeabschnitt der eingangs genannten Art vorgeschlagen, dass der Aufnahmeabschnitt ausgebildet ist, mit einem erfindungsgemäßen Haltesystem zusammenzuwirken.

In diesem Zusammenhang wird bspw. vorgeschlagen, dass der Aufnahmeabschnitt eine Aufnahmevertiefung aufweist, in die ein Abdeckelement des Haltesystems einsetzbar ist, wobei insbesondere eine Innkontur der Aufnahmevertiefung einer Außenkontur des Abdeckelements entspricht. Auf diese Weise kann das Abdeckelement formschlüssig in die Aufnahmevertiefung eingesetzt und von dieser aufgenommen werden. Eine Drehung des Aufnahmeabschnitts (z.B. zusammen mit dem Endgerät, dem der Aufnahmeabschnitt zugeordnet ist) führt dann zwangsläufig zu einer entsprechenden Drehung des Abdeckelements.

Darüber hinaus wird vorgeschlagen, dass der Aufnahmeabschnitt sich in einer Aufnahmevertiefung in radialer Richtung erstreckende Taschen aufweist, die zur Aufnahme von Rastlaschen eines an einer Befestigungsvorrichtung des Haltesystems drehfest befestigten Rastelements ausgebildet sind, wenn der dem Endgerät zugeordnete Aufnahmeabschnitt in einer Einsetzrichtung auf ein Abdeckelement des Haltesystems aufgesetzt ist und der Aufnahmeabschnitt in einer senkrecht zu der Einsetzrichtung verlaufenden Drehebene von einer Freigabeposition, in der der Aufnahmeabschnitt in der Einsetzrichtung auf das Abdeckelement aufsetzbar oder in der entgegengesetzten Richtung von diesem abnehmbar ist, in eine Rastposition gedreht ist, in der der Aufnahmeabschnitt mit dem Rastelement in Eingriff steht.

Schließlich wird vorgeschlagen, dass der Aufnahmeabschnitt als ein von dem mobilen Endgerät separates Bauteil ausgebildet ist, das an dem mobilen Endgerät befestigbar ist, insbesondere als Bestandteil einer Schutzhülle für das Endgerät. Die Schutzhülle mit dem integrierten Aufnahmeabschnitt, kann in bekannter Weise an dem Endgerät befestigt werden. Alternativ wäre es auch denkbar, den Aufnahmeabschnitt mit einer Klebeseite zu versehen, und ihn auf eine Rückseite eines Endgeräts zu kleben. Ebenso wäre es denkbar, dass bspw. bei neueren Endgeräten der erfindungsgemäße Aufnahmeabschnitt integraler Bestandteil, insbesondere einer Rückseite, eines Gehäuses des Endgeräts ist.

Weitere Merkmale und Vorteile der vorliegenden Erfindung werden nachfolgend anhand der Figuren näher erläutert. Es wird darauf hingewiesen, dass die in den Figuren gezeigten Merkmale auch jedes für sich alleine erfindungswesentlich sein können, selbst wenn dies in der nachfolgenden Beschreibung nicht ausdrücklich erwähnt ist. Ferner wäre es denkbar, die einzelnen in den Figuren gezeigten Merkmale in beliebiger Weise miteinander zu kombinieren, selbst wenn eine solche Kombination in der nachfolgenden Beschreibung nicht ausdrücklich erwähnt ist. Es zeigen:
- Fig. 1: eine Explosionsdarstellung des erfindungsgemäßen Haltesystems zur lösbaren Befestigung eines mobilen Endgeräts an einem Fahrzeug in einer ersten perspektivischen Ansicht;
- Fig. 2: eine Explosionsdarstellung des Haltesystems aus Fig. 1 in einer anderen perspektivischen Ansicht;
- Fig. 3a: ein kombiniertes Rast- und Federelement des Haltesystems aus Fig. 1;
- Fig. 3b: einen Querschnitt durch einen Rastnocken des Rast- und Federelements aus Fig. 3a;
- Fig. 4: einen Ausschnitt des kombiniertes Rast- und Federelement aus Fig. 3a;
- Fig. 5a: eine Schnittdarstellung des Haltesystems aus Fig. 1 in einer entriegelten Stellung;
- Fig. 5b: eine Schnittdarstellung des Haltesystems aus Fig. 1 in einer verriegelten Stellung;
- Fig. 6: einen einem mobilen Endgerät zugeordneten Aufnahmeabschnitt mit einem damit in Eingriff stehenden Rastelement des Haltesystems aus Fig. 1 in einer verriegelten Stellung in einer perspektivischen Ansicht von vorne;
- Fig. 7a: den Aufnahmeabschnitt aus Fig. 6 in einer Rückansicht;
- Fig. 7b: einen vergrößerten Ausschnitt des Aufnahmeabschnitts und einer Rastlasche aus Fig. 6 teilweise im Schnitt; und

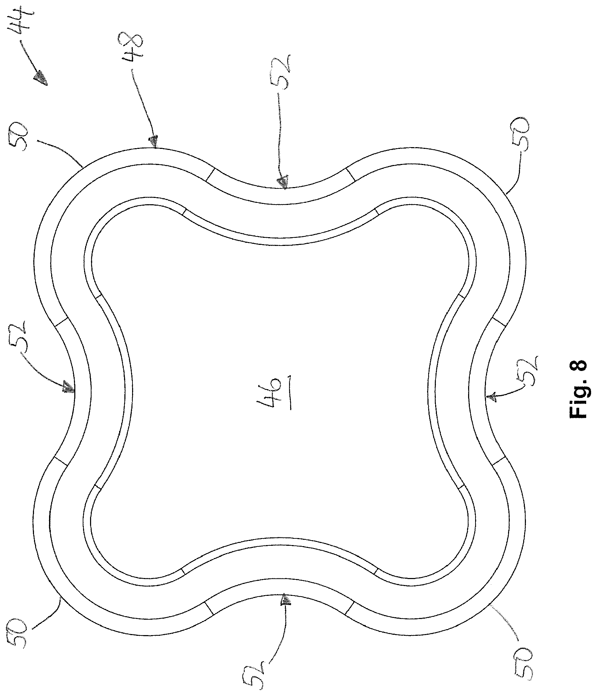

- Fig. 8: ein Abdeckelement des Haltesystems aus Fig. 1 in einer Draufsicht.

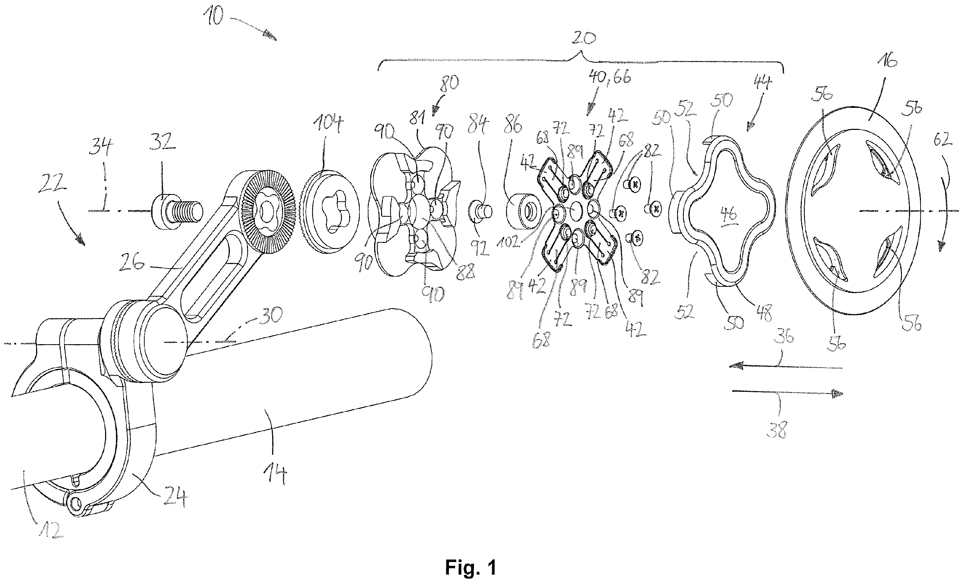

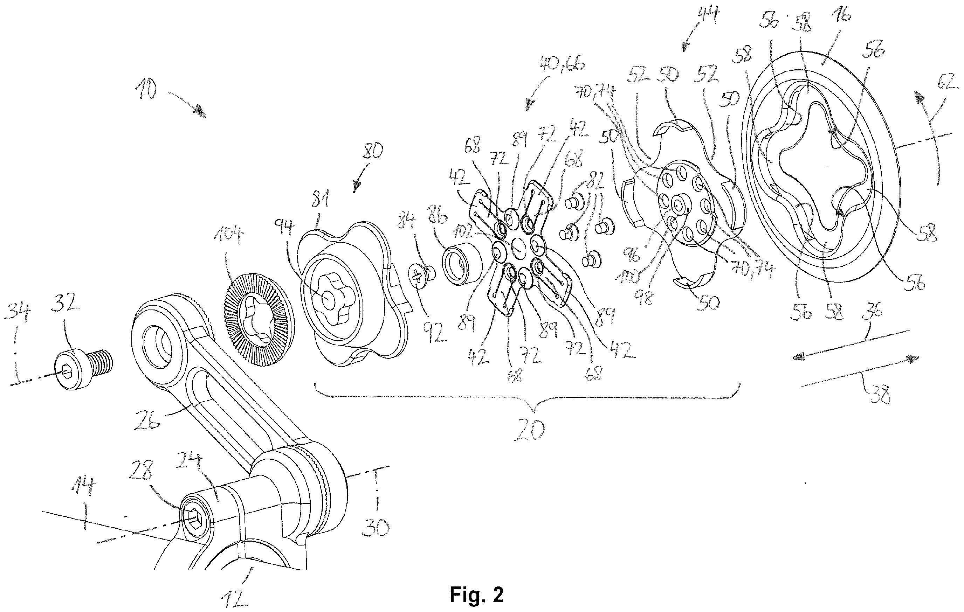

Ein bevorzugtes Ausführungsbeispiel des erfindungsgemäßen Haltesystems ist in seiner Gesamtheit in den Fign. 1 und 2 mit dem Bezugszeichen 10 bezeichnet. Das Haltesystem 10 dient zur lösbaren Befestigung eines mobilen Endgeräts (nicht dargestellt) an einem Bauteil 12 eines Fahrzeugs (nicht dargestellt). Das mobile Endgerät kann bspw. ein Mobiltelefon, insbesondere ein Smartphone, ein Tablet-PC, ein Navigationssystem, eine Foto- oder Filmkamera (z.B. GoPro) oder ähnliches sein. Das Bauteil 12 des Fahrzeugs, an dem das Haltesystem 10 befestigt ist, kann bspw. eine Lenkstange sein. Ein Griff der Lenkstange 12 ist mit dem Bezugszeichen 14 bezeichnet. Alternativ könnte das Bauteil 12 auch einen Lenkervorbau, ein Armaturenbrett, eine Mittelkonsole, Rippen eines Luftauslasses einer Fahrzeugheizung oder ein sonstiges Bauteil eines Fahrzeugs umfassen. Das Fahrzeug kann ein beliebiges Fahrzeug mit oder ohne motorische Unterstützung sein, insbesondere ein Zweirad (z.B. Fahrrad, Leichtkraftrad, Motorrad), ein Dreirad (z.B. Trike) oder ein Vierrad (z.B. Quad oder Auto).

Dem Endgerät ist ein Aufnahmeabschnitt 16 zugeordnet, der mit dem Haltesystem 10 zusammenwirkt und lösbar in Eingriff gebracht werden kann, wie weiter unten noch ausführlich erläutert wird. Der Aufnahmeabschnitt 16 kann separat von dem Endgerät ausgebildet sein und bspw. mit seiner Rückseite 18 auf der Rückseite eines Endgeräts oder einer Hülle für das Endgerät befestigt sein, bspw. mittels Klebstoff. Die Hülle besteht in bekannter Weise bspw. aus einem elastischen Material, z.B.

Kunststoff oder Gummi, und kann über das Endgerät gestülpt werden, so dass sie fest an dem Endgerät befestigt ist. Alternativ kann der Aufnahmeabschnitt 16 auch einstückig mit einem Gehäuse des Endgeräts oder mit einer Hülle für das Endgerät ausgebildet sein. Der Aufnahmeabschnitt 16 ist dem Endgerät derart zugeordnet, dass eine Drehung des Endgeräts in einer Drehebene, die vorzugsweise parallel zu der Rückseite 18 des Aufnahmeabschnitts 16 verläuft, zu einer entsprechenden Drehung des Aufnahmeabschnitts 16 in der Drehebene führt. Selbstverständlich könnte der Aufnahmeabschnitt 16 auch einer Tasche zugeordnet sein, die bspw. zur Aufnahme eines mobilen Endgeräts und/oder anderer persönlicher Gegenstände (z.B. Landkarten, Geldbörse, Ausweise, Schlüssel, Mund-Nase-Schutz etc.) ausgebildet ist. Somit könnten mittels des Haltesystems 10 auch einfach nur Taschen ohne Endgeräte an einem Fahrzeug befestigt werden.

Das Haltesystem 10 umfasst eine Haltevorrichtung 20 zur lösbaren Befestigung an dem Endgerät oder der Tasche. In dem gezeigten Beispiel kann die Haltevorrichtung 20 mittelbar über den Aufnahmeabschnitt 16 an dem Endgerät oder der Tasche lösbar befestigt werden.

Ferner umfasst das Haltesystem 10 eine Befestigungsvorrichtung 22 zur vorzugsweise lösbaren Befestigung der Haltevorrichtung 20 an dem Bauteil 12 des Fahrzeugs. In dem gezeigten Beispiel umfasst die Befestigungsvorrichtung 22 eine Schraubschelle oder Schraubklemme 24 zur Befestigung an einer Lenkstange 12 sowie einen Haltearm 26, an dessen distalem Ende die Haltevorrichtung 20 befestigt ist. Eine erste Befestigungsschraube 28 (vgl. Fig. 2) ist in der Schraubklemme 24 geführt und dient einerseits zum Festlegen der Schraubklemme 24 an der Lenkstange 12 und andererseits zum Festlegen einer Drehposition des Haltearms 26 relativ zu der Schraubklemme 24 um eine erste Drehachse 30. Eine zweite Befestigungsschraube 32 ist in dem distalen Ende des Haltearms 26 geführt und dient zur Befestigung der Haltevorrichtung 20 an dem Haltearm 26 und anderseits zum Festlegen einer Drehposition der Haltevorrichtung 20 relativ zu dem Haltearm 26 um eine zweite Drehachse 34.

In einer alternativen Ausführungsform wäre es auch denkbar, dass die Befestigungsvorrichtung 22 einen Standfuß oder eine Klemme umfasst, um bspw. ein Endgerät auf einem Schreibtisch, Regal o.ä. anzuordnen und/oder daran zu befestigen.

Die Befestigungsvorrichtung 22 kann beliebig ausgestaltet sein. So wäre es bspw. denkbar, dass sie statt der Schraubklemme 24 lediglich über Gummibänder o.ä. an der Lenkstange 12 gehalten ist, um eine schnelle und werkzeuglose Befestigung der Befestigungsvorrichtung 22 an der Lenkstange 12 zu realisieren. Alternativ könnte sie auch statt der Schraubklemme 24 eine Klebefläche aufweisen, um Befestigungsvorrichtung 22 auf einer glatten ebenen Fläche (bspw. einem Armaturenbrett, einer Mittelkonsole o.ä.) werkzeuglos befestigen zu können. Ferner wäre es denkbar, dass sie keinen Haltearm 26 aufweist, um eine besonders kleinbauende Version der Befestigungsvorrichtung 22 zu realisieren.

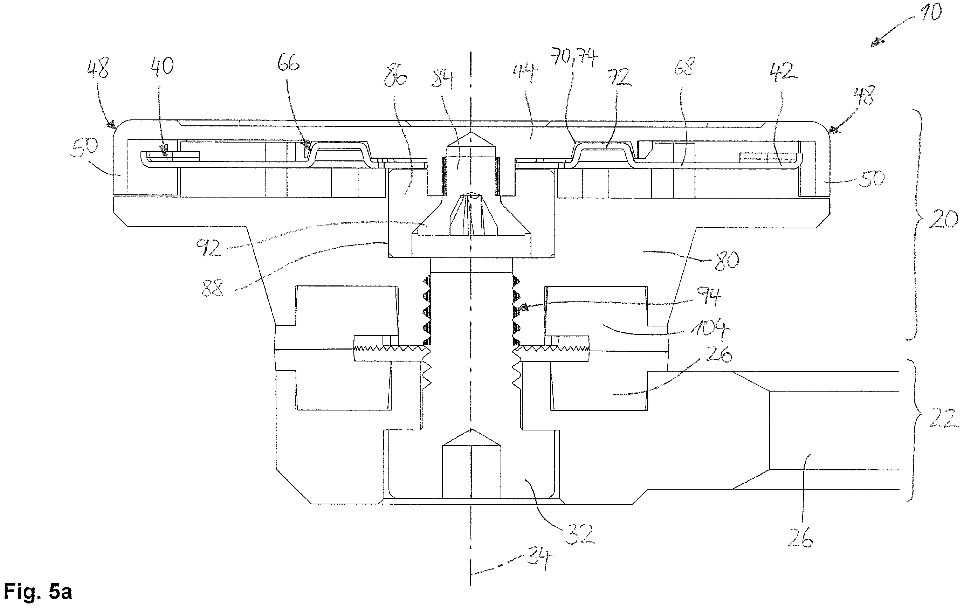

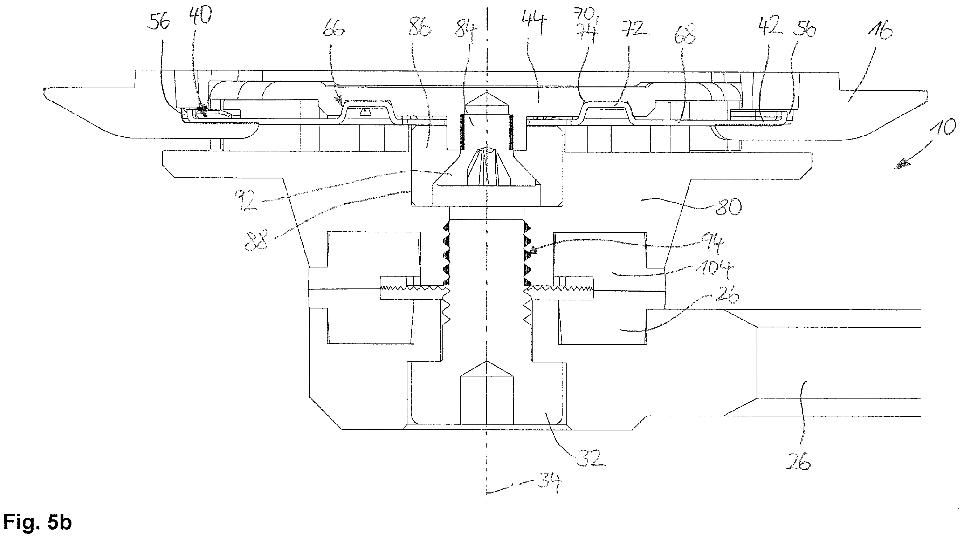

Die Haltevorrichtung 20 ist ausgebildet, um mit dem dem Endgerät zugeordneten Aufnahmeabschnitt 16 lösbar in Eingriff zu treten. Die lösbare Befestigung des Endgeräts an der Haltevorrichtung 20 kann durch Drehen des dem Endgerät zugeordneten Aufnahmeabschnitts 16 relativ zu der Haltevorrichtung 20 in der Drehebene umgeschaltet werden. Dabei kann die lösbare Befestigung insbesondere zwischen einer Freigabeposition (oder entriegelte Stellung), in der der Aufnahmeabschnitt 16 in einer Einsetzrichtung 36 senkrecht zu der Drehebene auf die Haltevorrichtung 20 aufsetzbar oder in entgegengesetzter Richtung 38 von dieser abnehmbar ist (vgl. Fig. 5a), und einer Rastposition (oder verriegelte Stellung) umgeschaltet werden, in der der Aufnahmeabschnitt 16 mit der Haltevorrichtung 20 in Eingriff tritt (vgl. Fig. 5b). Die Drehung des Aufnahmeabschnitts 16 zusammen mit dem Endgerät erfolgt dabei um eine Drehachse, die der zweiten Drehachse 34 entspricht oder parallel zu dieser verläuft, und bevorzugt parallel zu den Richtungen 36, 38 und senkrecht zu der Drehebene verläuft. Die Drehrichtung von der Freigabein die Rastposition ist in dem Beispiel mit dem Bezugszeichen 62 bezeichnet. Selbstverständlich könnte die Drehrichtung zum Verriegeln des Haltesystems 10 auch entgegengesetzt sein.

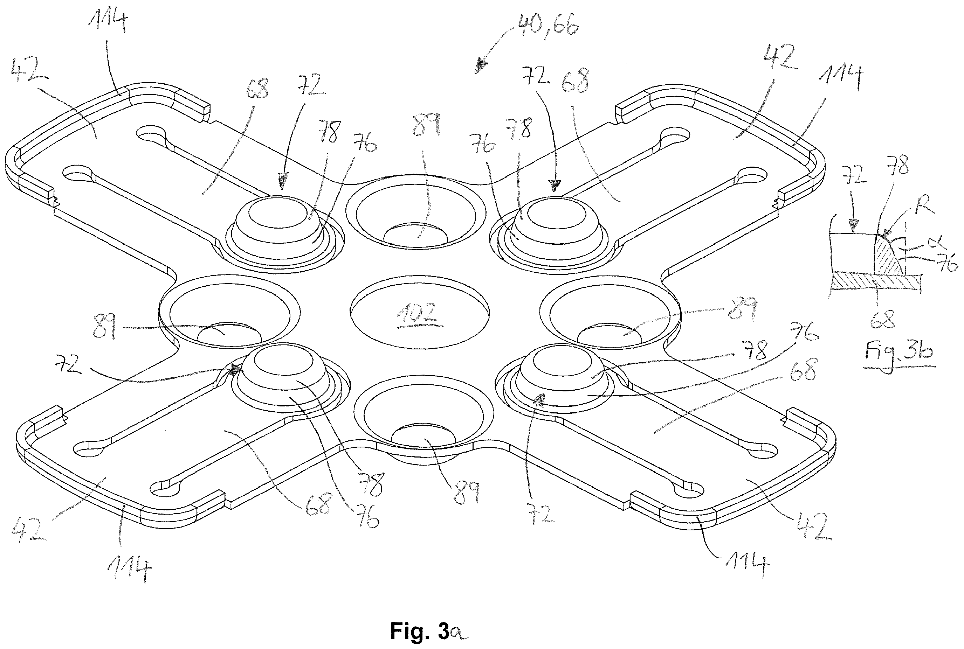

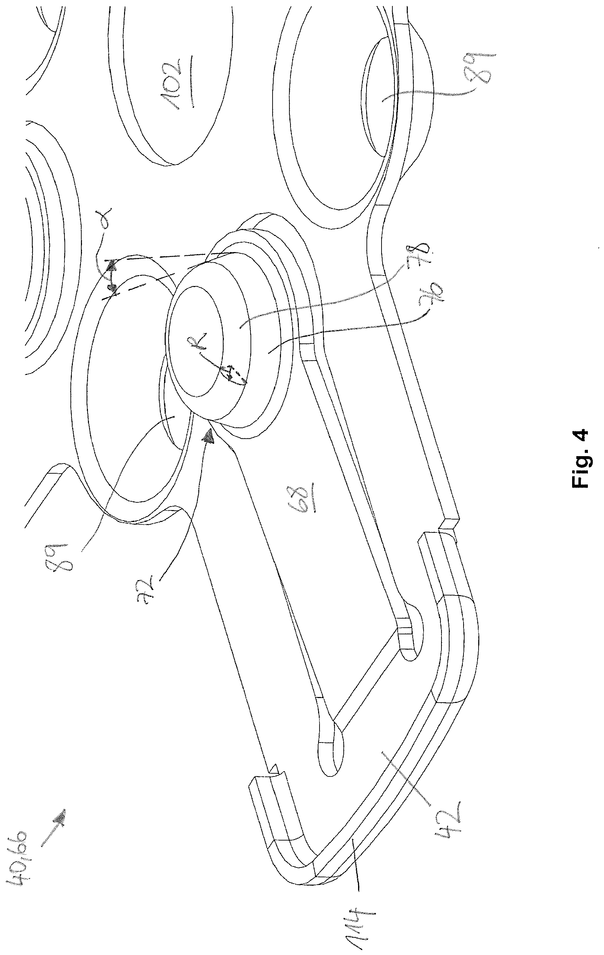

Die Haltevorrichtung 20 des Haltesystems 10 umfasst ein an der Befestigungsvorrichtung 22 drehfest befestigtes Rastelement 40 mit mindestens zwei radial nach außen abstehenden und sich in der Drehebene oder parallel dazu erstreckenden Rastlaschen 42. In dem gezeigten Beispiel hat das Rastelement 40 vier sich in einem Winkel von 90° versetzt zueinander in radialer Richtung erstreckende Rastlaschen 42. Selbstverständlich wäre auch eine andere Anzahl an Rastlaschen 42 und/oder ein anderer Winkel zwischen benachbarten Rastlaschen 42 denkbar. Das Rastelement 40 ist im Detail in den Fign. 3a, 3b, 4 gezeigt.

Ferner umfasst die Haltevorrichtung 20 des Haltesystems 10 ein an der Befestigungsvorrichtung 22 drehbar befestigtes Abdeckelement 44, das eine sich in der Drehebene oder parallel dazu erstreckende Abdeckfläche 46 mit einer Außenkontur 48 aufweist. In dem gezeigten Beispiel hat die Außenkontur 48 die Form eines Quadrats mit abgerundeten Ecken und symmetrisch nach innen gewölbten Seitenflächen. Andere Formen sind selbstverständlich ebenfalls denkbar.

Bei auf die Haltevorrichtung 20 aufgesetztem Aufnahmeabschnitt 16 kann das Abdeckelement 16 zusammen mit dem Endgerät in der Drehebene zwischen einer Freigabeposition und einer Rastposition gedreht werden. Dabei verdeckt in der Freigabeposition die Abdeckfläche 46 des Abdeckelements 44, bei einem Blick auf das Abdeckelement 44 im Wesentlichen senkrecht zu der Drehebene (und damit auch senkrecht zu der Abdeckfläche 46), die Rastlaschen 42 des Rastelements 40 zumindest größtenteils, bevorzugt vollständig. In der Rastposition gibt das Abdeckelement 44 die Rastlaschen 42 des Rastelements 40 zumindest teilweise frei, sodass, bei einem Blick auf das Abdeckelement 44 im Wesentlichen senkrecht zu der Drehebene, die Rastlaschen 42 in radialer Richtung weiter über die Außenkontur 48 der Abdeckfläche 46 des Abdeckelements 44 hervorragen als in der Freigabeposition.

Besonders vorteilhaft ist dabei, dass das Abdeckelement 44 beweglich (insbesondere in der Drehebene drehbar) ausgestaltet ist und nicht das Rastelement 40 mit seinen Rastlaschen 42. Die sichere und zuverlässige Befestigung des Endgeräts an dem Haltesystem 10 wird in der Rastposition durch ein Zusammenwirken des Rastelements 40 bzw. der Rastlaschen 42 mit dem dem Endgerät zugeordneten Aufnahmeabschnitt 16 erreicht.

Ein weiterer Vorteil ist, dass das Abdeckelement 44 in der Freigabeposition das Rastelement 40 größtenteils, bevorzugt vollständig verdeckt, so dass es für einen Betrachter bei einem Blick senkrecht auf die Abdeckfläche 46 des Abdeckelements 44 kaum, im Idealfall sogar garnicht sichtbar ist. Somit ist das Rastelement 40 mit den Rastlaschen 42 in der Freigabeposition vor Witterung, mechanischer Belastung und Verschmutzung geschützt. Erst wenn das Rastelement 40 zur lösbaren Befestigung des Endgeräts in der Rastposition benötigt wird, dreht das Abdeckelement 44 in der Drehebene und gibt einen größeren Teil des Rastelements 40 insbesondere der distalen Enden der Rastlaschen 42 frei als zuvor in der Freigabeposition.

Es wird vorgeschlagen, dass das Abdeckelement 44 entlang der Außenkontur 48 seiner Abdeckfläche 46 eine sich im Wesentlichen senkrecht zur Abdeckfläche 46 erstreckende Außenumfangsfläche 50 mit seitlichen Aussparungen 52 aufweist. Die Aussparungen 52 können derart ausgebildet und in der Außenumfangsfläche 50 angeordnet sind, dass die Rastlaschen 42 in der Rastposition zumindest teilweise, insbesondere mit ihren distalen Enden, durch die Aussparungen 52 des Abdeckelements 44 hindurch über die Außenkontur 48 der Abdeckfläche 46 hervorragen. Dadurch kann das Rastelement 40 nicht nur von oben, d.h. senkrecht zur Drehebene, vor Witterung, mechanischer Belastung und Verschmutzung, geschützt werden, sondern auch größtenteils von der Seite her.

Bevorzugt sind die Rastlaschen 42 ausgebildet, in der Rastposition mit dem dem Endgerät zugeordneten Aufnahmeabschnitt 16 in Eingriff zu treten, wobei das Endgerät durch diesen Eingriff an der Haltevorrichtung 20 gehalten ist. Das Abdeckelement 44 wird in einer Freigabeposition von dem Aufnahmeabschnitt 16 formschlüssig aufgenommen und während des Übergangs in eine Rastposition zusammen mit dem Aufnahmeabschnitt 16 und dem zugeordneten Endgerät in der Drehebene gedreht. Durch die Drehung verändert sich also nicht nur die Drehposition des Abdeckelements 44 relativ zu dem Rastelement 40 bzw. den Rastlaschen 42, sondern auch die Drehposition des Aufnahmeabschnitts 16 relativ zu dem Rastelement 40 bzw. den Rastlaschen 42. In der Rastposition steht der Aufnahmeabschnitt 16 mit den Rastlaschen 42 des Rastelements 40 in Eingriff.

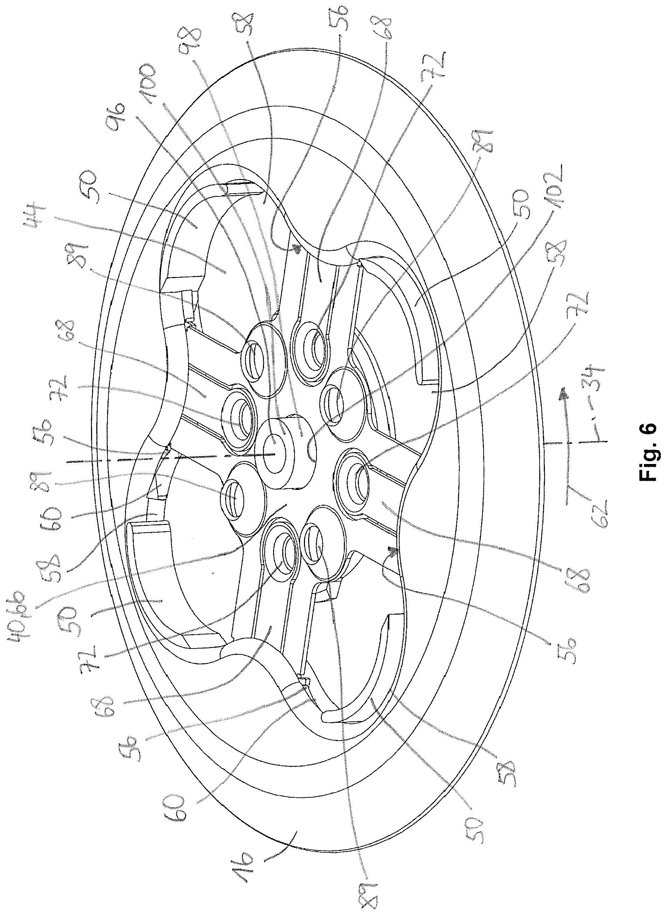

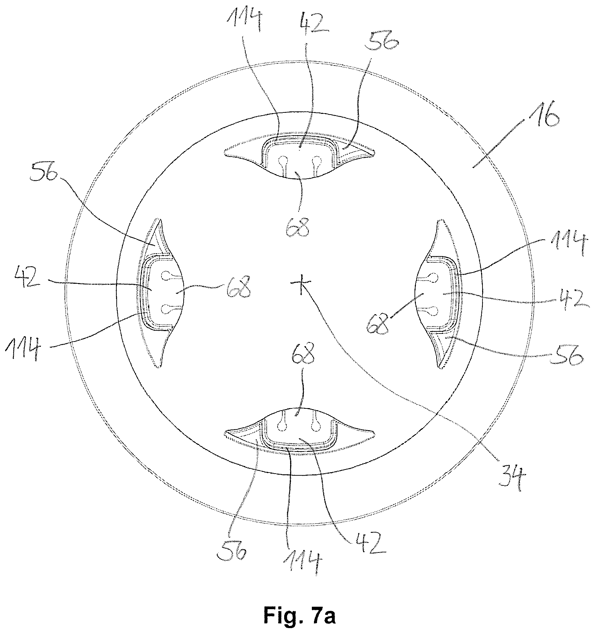

Der dem Endgerät zugeordnete Aufnahmeabschnitt 16 weist bevorzugt eine Aufnahmevertiefung 54 (vgl. Fig. 2) zur Aufnahme des Abdeckelements 44 in der Freigabeposition auf. Ferner weist der Aufnahmeabschnitt 16 vorzugsweise in der Aufnahmevertiefung 54 angeordnete und sich in radialer Richtung erstreckende Taschen 56 auf. Dabei hintergreifen die Rastlaschen 42 des Rastelements 40 in der Rastposition die Taschen 56 (vgl. Fig. 6). Aussparungen in einer Rückwand des Aufnahmeabschnitts 16 (vgl. Fig. 7a) geben den Blick frei in die Taschen 56. Zwischen den Taschen 56 der Aufnahmevertiefung 54 sind Freiräume 58 ausgebildet, durch die die Rastlaschen 42 (verdeckt von den entsprechenden Abschnitten des Abdeckelements 44) in der Freigabeposition in der Einsetzrichtung 36 in die Aufnahmevertiefung 54 eintreten können. Die Taschen 56 sind bevorzugt als Hinterschneidungen ausgebildet, sodass ein Drehen des Aufnahmeabschnitts 16 relativ zu dem Rastelement 40 aus der Freigabeposition (entriegelte Stellung) in die Rastposition (verriegelte Stellung) dazu führt, dass sich die Taschen 56 in Drehrichtung 62 über die Rastlaschen 42 schieben, sodass die Rastlaschen 42 die Taschen 56 hintergreifen. In diesem Sinn ist es vorteilhaft, wenn die Taschen 56 zumindest in einer Drehrichtung 62 eine Eintrittsöffnung 60 für die Rastlaschen 42 aufweisen.

Durch den Eingriff der Rastlaschen 42 mit den Taschen 56 des Aufnahmeabschnitts 16 wird verhindert, dass der Aufnahmeabschnitt 16 zusammen mit dem Endgerät von dem Haltesystem 10 in der Richtung 38 abgehoben werden kann. Das Endgerät ist in axialer Richtung an dem Haltesystem 10 gesichert. Erst wenn die Aufnahmeabschnitt 16 zusammen mit dem Endgerät in der Drehebene in die Freigabeposition gedreht wurde, verlassen die Rastlaschen 42 die Taschen 56 und werden wieder von dem Abdeckelement 44 verdeckt. Nun ist es möglich, den Aufnahmeabschnitt 16 zusammen mit dem Endgerät von dem Haltesystem 10 in der Richtung 38 abzuheben.

Die Außenkontur 48 der Abdeckfläche 46 des Abdeckelements 44 (vgl. Fig. 1) kann einer Innenkontur 64 der Aufnahmevertiefung 54 des Aufnahmeabschnitts 16 (vgl. Fig. 2) entsprechen. Auf diese Weise kann ein formschlüssiger Eingriff des Aufnahmeabschnitts 16 mit dem Abdeckelement 44 ermöglicht werden, sodass eine Drehung 62 des Endgeräts mit dem zugeordneten Aufnahmeabschnitt 16 zu einer gleichzeitigen und zwangsläufigen Drehung 62 des Abdeckelements 44 führt. Damit kann die Innenkontur 64 der Aufnahmevertiefung 54 die gleiche charakteristische Form wie die Außenkontur 48 der Abdeckfläche 46 des Abdeckelements 44 haben. Im Inneren der Aufnahmevertiefung 54 sind lediglich noch die Taschen 56 ausgebildet, die jedoch die charakteristische Form der Innenkontur 64 nicht beeinträchtigen, da sie sich ausgehend von der Innenkontur 64 radial nach außen in den Aufnahmeabschnitt 16 hinein erstrecken. Der Aufnahmeabschnitt 16 hat keinerlei bewegte Teile und, insbesondere bei einem Blick in der Richtung 38 senkrecht zu der Grundfläche der Aufnahmevertiefung 54, keinerlei sichtbare Rastelemente, Halteelemente, Führungsnuten o.ä. Dies ermöglicht eine besonders schlichte, unauffällige, robuste und widerstandsfähige Ausgestaltung des dem mobilen Endgerät zugeordneten Aufnahmeabschnitts 16.

Bevorzugt weist das Haltesystem 10 ein an der Befestigungsvorrichtung 22 drehfest befestigtes Federelement 66 auf, das während einer Drehbewegung 62 des Abdeckelements 44 mit diesem zusammenwirkt, so dass das Abdeckelement 44 relativ zu dem Rastelement 40 in diskreten Drehpositionen lösbar gehalten ist. In dem gezeigten Beispiel ist das Federelement 66 zusammen mit dem Rastelement 40 als ein kombiniertes Bauteil ausgebildet. Dieses kombinierte Bauteil 40, 66 erfüllt somit die Funktion des Rastelements 40 und gleichzeitig auch die Funktion des Federelements 66. Dies hält die Anzahl der Bauteile des Haltesystems 10 möglichst gering. Das Federelement 66 könnte jedoch auch separat von dem Rastelement 40 ausgebildet sein, wobei es dann mit dem Rastelement 40 mittelbar oder unmittelbar drehfest in Verbindung stehen sollte.

Die diskreten Drehpositionen des Abdeckelements 44, in denen es relativ zu dem Rastelement 40 durch das Federelement 66 gehalten wird, entsprechen bevorzugt zumindest einer Freigabeposition und einer Rastposition des Haltesystems 10.

Das Federelement 66 sorgt dafür, dass das Abdeckelement 44 und damit auch der darauf aufgesetzte Aufnahmeabschnitt 16 und mit diesem das gesamte mobile Endgerät in den diskreten Drehpositionen, bspw. in der Rastposition, gesichert werden. Ein unbeabsichtigtes Verlassen der Rastposition und Lösen des Aufnahmeabschnitts 16 von dem Rastelement 40 kann somit wirksam verhindert werden. Gesondert zu bedienende Sicherungsmittel sind bei dem Haltesystem 10 nicht erforderlich. Vielmehr erfüllt das Federelement 66 die Funktion von Sicherungsmitteln, die automatisch nach Erreichen der Rastposition in Aktion treten. Erst durch Überwinden relativ hoher Kräfte entgegen der Drehbewegung 62 von der Rastposition in die Freigabeposition kann die Rastposition verlassen werden, die Freigabeposition erreicht und der Aufnahmeabschnitt 16 von dem Abdeckelement 44 abgehoben und das Endgerät von dem Haltesystem 10 entfernt werden.

Das Federelement 66 hat bevorzugt eine Flächenerstreckung in der Drehebene oder parallel dazu und weist mindestens eine sich in radialer Richtung erstreckende und quer zur Drehebene wirkende Federlasche 68 auf. In dem gezeigten Beispiel hat das Federelement 66 vier sich in einem Winkel von 90° versetzt zueinander in radialer Richtung erstreckende und quer zur Drehebene wirkende Federlaschen 68. Selbstverständlich könnte das Federelement 66 auch eine andere Anzahl von Federlaschen 68 oder eine andere Anordnung der Federlaschen 68 aufweisen.

Jede der Federlaschen 68 wirkt mit mindestens einem entsprechenden dem Abdeckelement 44 zugeordneten diskreten Abschnitt 70 (vgl. Fig. 2) zusammen, wenn sich das Abdeckelement 44 in einer der diskreten Drehpositionen befindet. sodass das Abdeckelement 44 in der diskreten Drehposition relativ zu dem Rastelement 40 lösbar gehalten ist. Über die Anzahl und Ausgestaltung (z.B. Abmessungen und Form) der Federlaschen 68 können die Haltekräfte eingestellt werden, mit denen das Abdeckelement 44 relativ zu dem Rastelement 40 in der oder den diskreten Drehpositionen gehalten ist. Auf diese Weise kann sichergestellt werden, dass das Abdeckelement 44 und damit auch der Aufnahmeabschnitt 16 und das Endgerät sicher und zuverlässig in der Rastposition gehalten sind, ohne dass es zusätzlicher Sicherungsmittel bedarf.

Bevorzugt sind mehr diskrete Abschnitte 70 an dem Abdeckelement 44 als Federlaschen 68 an dem Federelement 66 vorgesehen. In dem gezeigten Beispiel hat das Abdeckelement 44 acht diskrete Abschnitte 70 (vgl. Fig. 2), mit denen die vier Federlaschen 68 in den diskreten Drehpositionen in Eingriff treten können. Dabei sind die diskreten Abschnitte 70 bspw. auf einem Radius um die Drehachse 34 des Abdeckelements 44 angeordnet. Die Abstände zwischen in Umfangsrichtung benachbarten Abschnitten 70 sind bevorzugt gleich. Somit sind die diskreten Abschnitte 70 in Fig. 2 jeweils um 45° zueinander beabstandet. Bevorzugt genügt bei dem erfindungsgemäßen Haltesystem 10 eine Drehung des Abdeckelements 44 um 45°, um das Haltesystem 10 zwischen der Freigabeposition und der Rastposition umzuschalten. Das Abdeckelement 44 ist sowohl in der Freigabeposition als auch in der Rastposition durch das Zusammenwirken der Federlaschen 68 des Federelements 66 mit den diskreten Abschnitten 70 des Abdeckelements 44 rastend gehalten.

Selbstverständlich wäre es auch denkbar, dass dem Abdeckelement 44 eine andere Anzahl an diskreten Abschnitten 70 zugeordnet ist, bspw. vier in einem Abstand von 90° zueinander angeordnete Abschnitte 70 (bspw. mit zwei um 180° zueinander versetzt angeordneten Federlaschen 68 oder mit vier um 90° zueinander versetzt angeordneten Federlaschen 68) oder sechs in einem Abstand von 60° zueinander angeordnete Abschnitte 70 (bspw. mit drei um 120° zueinander versetzt angeordneten Federlaschen 68).

Bevorzugt umfasst jede der Federlaschen 68 an ihrem distalen Ende einen Rastnocken 72. Dabei können die dem Abdeckelement 44 zugeordneten diskreten Abschnitte 70 Rastvertiefungen 74 aufweisen, die auf einer dem Federelement 66 zugewandten Seite des Abdeckelements 44 ausgebildet sind. Die Rastnocken 72 können mit den Rastvertiefungen 74 in Eingriff treten, wenn sich das Abdeckelement 44 in einer der diskreten Drehpositionen befindet. In den diskreten Drehpositionen taucht der Rastnocken 72 aufgrund der durch die Federlasche 68 erzeugten Federkraft in die entsprechende Rastvertiefung 74 ganz oder teilweise ein. Der Rastnocken 72 hat vorzugsweise einen runden Querschnitt und eine umlaufende Umfangswand 76 mit einem dem Abdeckelement 44 zugewandten distalen Ende 78 (vgl. Fign. 3 und 4).

Die Umfangswand 76 der Rastnocken 72 verläuft bevorzugt nicht senkrecht zu der Drehebene bzw. der Flächenerstreckung des Federelements 66, sondern in einem Winkel α (#0) relativ zu der Senkrechten, so dass die Rastnocken 72 insgesamt die Form eines Kegelstumpfes haben. Die Umfangswand 76 im Winkel α dient als Anlaufschräge, damit die Rastnocken 72 beim Übergang von der Rastposition in die Freigabeposition die Rastvertiefungen 74 einfacher verlassen können. Über den Winkel α können die Kräfte eingestellt werden, die entgegen der Drehrichtung 62 aufgewandt werden müssen, um die Rastnocken 72 aus den Rastvertiefungen 74 herauszubewegen und die Rastposition zu verlassen. Der Winkel α liegt bevorzugt im Bereich von 10° bis 45°, vorzugsweise im Bereich von 12° bis 30°, besonders bevorzugt bei etwa 15°.

Das dem Abdeckelement 44 zugewandte distale Ende 78 der umlaufenden Umfangswand 76 der Rastnocken 72 hat am Übergang zu der Umfangswand 76 bevorzugt einen Gleitradius R von < 1 mm, vorzugsweise von < 0,5 mm, besonders bevorzugt von etwa 0,2 mm. Auch der Gleitradius R hat Einfluss auf die Kräfte, die entgegen der Drehrichtung 62 aufgewandt werden müssen, um die Rastnocken 72 aus den Rastvertiefungen 74 herauszubewegen und die Rastposition zu verlassen.

Selbstverständlich können auch die Wandungen der Rastvertiefungen 74 in definierter Weise ausgestaltet sein, um die Kräfte zu beeinflussen, die entgegen der Drehrichtung 62 aufgewandt werden müssen, um die Rastnocken 72 aus den Rastvertiefungen 74 herauszubewegen und die Rastposition zu verlassen. Auch die Wandungen der Rastvertiefungen 74 können bspw. eine Anlaufschräge aufweisen.

Das Federelement 66 mit den Federlaschen 68 und den Rastnocken 72, die mit den Rastvertiefungen 74 in dem Abdeckelement 44 zusammenwirken, hat den Vorteil, dass es einem Nutzer eine deutlich wahrnehmbare haptische Rückmeldung liefert, sobald die Rastposition sicher erreicht ist, und dass der Nutzer damit sicher sein kann, dass das Endgerät an dem Haltesystem 10 gesichert ist.

Ferner wird vorgeschlagen, dass das Haltesystem 10 ein Halteelement 80 aufweist, das drehfest an der Befestigungsvorrichtung 22 befestigt ist. Alternativ könnte das Halteelement 80 auch einstückig mit der Befestigungsvorrichtung 22 ausgebildet sein. Das Rastelement 40 und/oder das Federelement 66 sind bevorzugt an dem Halteelement 80 drehfest befestigt. Die Befestigung des Rastelements 40 und/oder das Federelements 66 an dem Halteelement 80 erfolgt bevorzugt mittels Schrauben 82.

Das Abdeckelement 44 ist bevorzugt an dem Rastelement 40 und/oder dem Federelement 66 drehbar befestigt. Die drehbare Befestigung des Abdeckelements 44 kann bspw. mittels einer zentralen Schraube 84 und einem Gleitring oder einem Gleitlager 86 erfolgen, der bzw. das als Drehführung für das Abdeckelement 44 dient, so dass dieses die Drehbewegung 62 zwischen der Freigabeposition und der Rastposition besser ausführen kann. Alternativ könnte das Abdeckelement 44 auch an dem Halteelement 80 drehbar befestigt sein.

Das Halteelement 80 hat vorzugsweise eine der Außenkontur 48 der Abdeckfläche 46 des Abdeckelements 44 entsprechende Außenkontur 81, so dass das Halteelement 80 und die drehbare Abdeckung 44 in der Ruheposition ein bis auf die Aussparungen 52 in der Umfangsfläche 50 des Abdeckelements 44 geschlossenes Gehäuse bilden, in dem das Rastelement 40 und/oder Federelement 66 angeordnet ist.

Bevorzugt ist die Drehbewegung des Abdeckelements 44 durch zwei Endanschläge (nicht dargestellt) bei 0° und 45° begrenzt. Der oder die Anschläge können durch ein Zusammenwirken einer ersten Anschlagfläche eines feststehenden Teils des Haltesystems 10, z.B. an dem Halteelement 80 oder dem Rastelement 40, mit einer zweiten Anschlagfläche eines beweglichen Teils des Haltesystems 10, z.B. an dem Abdeckelement 44 oder dem Aufnahmeabschnitt 16. Es ist somit nicht möglich, auch unter großem Kraftaufwand, das Haltesystem 10 durch Überdrehen in Drehrichtung 62 oder entgegengesetzt dazu zu beschädigen. Alternativ könnte auf die Anschläge aber auch verzichtet werden, was den Vorteil hätte, dass ein Endgerät bzw. dessen Bildschirm durch Drehen aus einer ersten Rastposition um 90° in eine zweite Rastposition von hochkant auf quer oder umgekehrt umgeschaltet werden kann.

Zur Montage der Haltevorrichtung 20 werden zunächst der Gleitring oder das Gleitlager 86 und die zentrale Schraube 84 in eine zentrale Vertiefung 88 des Halteelements 80 eingesetzt, und dann wird das kombinierte Rast- und Federelement 40, 66 an dem Halteelement 80 befestigt, indem die Schrauben 82 durch entsprechende Löcher 89 in dem Rast- und Federelement 40, 66 hindurchgeführt und in entsprechende Vertiefungen 90 mit Innengewinde am Halteelement 80 geschraubt werden. Dadurch sind der Gleitring oder das Gleitlager 86 und die zentrale Schraube 84 zwischen dem Halteelement 80 und dem Rast- und Federelement 40, 66 eingeschlossen. Ein Betätigungsabschnitt 92 der Schraube 84 ist über eine zentrale Bohrung 94 (vgl. Fig. 2), die in die zentrale Vertiefung 88 mündet, zugänglich. Dann wird das Abdeckelement 44 auf der dem Halteelement 80 abgewandten Seite des Rast- und Federelements 40, 66 aufgesetzt und die zentrale Schraube 84 durch die zentrale Bohrung 94 hindurch in einer zentralen Vertiefung 96 mit Innengewinde an dem Abdeckelement 44 festgeschraubt. Eine Außenumfangsfläche 98 eines um die zentrale Vertiefung 96 des Abdeckelements 44 umlaufenden Kragens 100 dient als Führungsfläche für eine zentrale Öffnung 102 des Rast- und Federelements 40, 66. Dann wird die montierte Haltevorrichtung 20 an der Befestigungsvorrichtung 22 befestigt, bspw. mittels der zweiten Befestigungsschraube 32 und einer Rastscheibe 104, um ein unbeabsichtigtes Verstellen der Haltevorrichtung 20 relativ zu der Befestigungsvorrichtung 22 um die zweite Drehachse 34 zu verhindern.

Die Erfindung bezieht sich auch auf einen Aufnahmeabschnitt 16 der oben beschriebenen Art. Insbesondere ist der Aufnahmeabschnitt 16 ausgebildet, mit einem Haltesystem 10 der oben beschriebenen Art zusammenzuwirken. Der Aufnahmeabschnitt 16 ist bevorzugt drehfest mittelbar oder unmittelbar an einem Endgerät befestigt, so dass er zusammen mit dem Endgerät in der Drehebene gedreht werden kann.

Der Aufnahmeabschnitt 16 weist bevorzugt eine Aufnahmevertiefung 54 zur formschlüssigen Aufnahme des Abdeckelements 44 auf. Eine Drehung des Aufnahmeabschnitts 16 zusammen mit dem Endgerät führt dann zwangsläufig zu einer entsprechenden Drehung des Abdeckelements 44. Die Innkontur 64 der Aufnahmevertiefung 54 entspricht bevorzugt einer Außenkontur 48 des Abdeckelements 44.

In der Aufnahmevertiefung 54 des Aufnahmeabschnitts 16 sind sich in radialer Richtung erstreckende Taschen 56 ausgebildet, die zur Aufnahme der Rastlaschen 42 des Rastelements 40 ausgebildet sind, wenn der dem Endgerät zugeordnete Aufnahmeabschnitt 16 in der Einsetzrichtung 36 auf das Abdeckelement 44 aufgesetzt und in der Drehebene von einer Freigabeposition, in der der Aufnahmeabschnitt 16 in der Einsetzrichtung 36 auf das Abdeckelement 44 aufsetzbar oder in der entgegengesetzten Richtung 38 von diesem abnehmbar ist, in eine Rastposition gedreht wurde, in der der Aufnahmeabschnitt 16 mit dem Rastelement 40 in Eingriff steht.

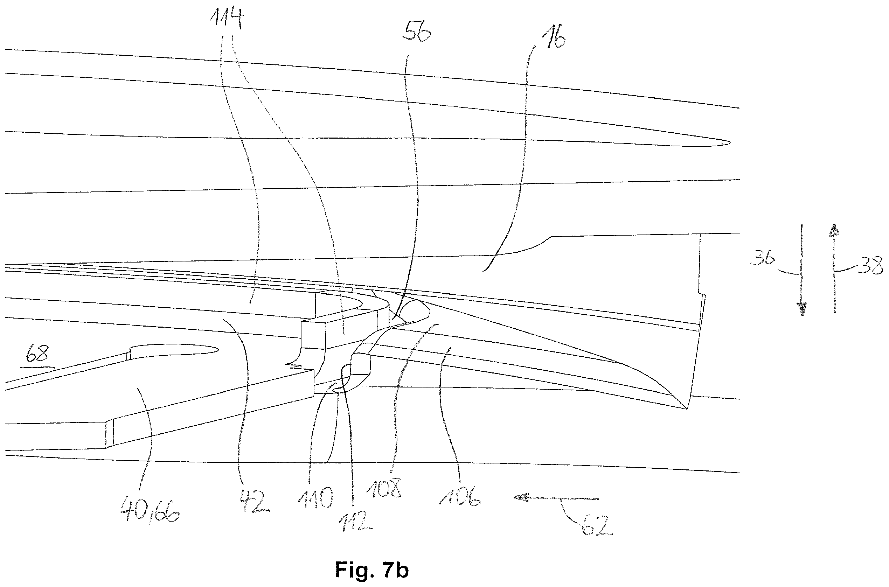

Wie in Fig. 7b gezeigt, können den Taschen 56 des Aufnahmeabschnitts 16 jeweils eine Anlauframpe oder Anlaufschräge 106 mit einer in Drehrichtung 62 ansteigenden Gleitfläche 108 zugeordnet sein, auf der die Rastlaschen 42 beim Übergang von der Freigabeposition in die Rastposition (in Drehrichtung 62) entlanggleiten und gleichzeitig in Richtung der Abdeckfläche 46 des Abdeckelements 44 (Richtung 38) angehoben werden. Das Anheben der Rastlaschen 42 ist möglich, da das Rastelement 40 bevorzugt aus einem federnd elastischen Material, bspw. einem Metallblech, gefertigt ist. Am Ende der Anlauframpen 106 sind in dem Aufnahmeabschnitt 16 Mulden 110 zur Aufnahme der Rastlaschen 42 in der Rastposition ausgebildet. Die Position der Mulden 110 entspricht somit der Rastposition der lösbaren Befestigung. Die Mulden 110 sind also in den Taschen 56 angeordnet. Beim Erreichen der Rastposition am Ende der Anlauframpen 106 schnappen die Rastlaschen 42 aufgrund ihrer Federwirkung in die Mulden 110 und sind dort formschlüssig und sicher gehalten. Damit ist auch der Aufnahmeabschnitt 16 und das ihm zugeordnete Endgerät sicher in der Rastposition gehalten. Das Erreichen der Rastposition kann durch ein deutlich hörbares Klickgeräusch und/oder durch haptische Rückmeldung begleitet werden, wenn die Rastlaschen 42 am Ende der Anlauframpen 106 in die Mulden 110 schnappen.

Gemäß dieser Ausgestaltung ist das Haltesystem 10 nicht nur dadurch in der Rastposition gehalten, dass das Abdeckelement 44 durch das Zusammenwirken der Federlaschen 68 bzw. der Rastnocken 72 des Federelements 66 mit den diskreten Abschnitten 70 bzw. den Rastvertiefungen 74 des Abdeckelements 44 rastend gehalten ist, sondern zusätzlich auch noch dadurch, dass der Aufnahmeabschnitt 16 durch das Zusammenwirken der Rastlaschen 42 des Rastelements 40 mit den Mulden 110 rastend gehalten ist. Durch die Federspannung der Rastlaschen 42 werden diese auf den Boden der Mulden 110 gedrückt und die Sicherung des Haltesystems 10 in der Rastposition ist weitgehend spielfrei.

Die Anlauframpen 106 haben den Vorteil, dass das Haltesystem 10 mit einem relativ geringen Kraftaufwand von der Freigabeposition in die Rastposition (in Drehrichtung 62) gebracht werden kann, da die Rastlaschen 42 auf den Anlauframpen 106 in die Mulden 110 gleiten können. Andererseits ist ein wesentlich höherer Kraftaufwand erforderlich, um das Haltesystem 10 aus der Rastposition in die Freigabeposition zu bewegen (entgegen der Drehrichtung 62), da in dieser Drehrichtung keine oder allenfalls sehr steile Rampen oder Schrägen 112 vorhanden sind, an denen die Rastlaschen 42 aus der Mulde 110 wieder auf die Anlauframpen 106 gehoben werden können. Zusätzlich müssen beim Übergang von der Rast- in die Freigabeposition auch die Haltekräfte der Rastnocken 72 in den Rastvertiefungen 74 überwunden werden. Die Bedienung des Haltesystems 10 ist also kräftemäßig asymmetrisch: leichtes Verriegeln, aber schwergängiges Entriegeln.

Bevorzugt weist das Rastelement 40 im Bereich der Rastlaschen einen umgebogenen oder umgebördelten Randabschnitt 114 auf. Durch die Ausgestaltung eines Biegeradius bzw. einer Schräge der Randabschnitte 114 der Rastlaschen 42 im Vergleich zur Flächenerstreckung des übrigen Rastelements 40 kann die Kraft beeinflusst werden, die erforderlich ist, um die Rastlaschen 42 aus den Mulden 110 heraus auf die Gleitfläche 108 der Anlauframpen 106 zu bewegen und somit das Haltesystem 10 zu lösen, d.h. aus der Rastposition in die Freigabeposition zu bewegen.

Unter dem Abdeckelement 44 bzw. dessen Abdeckfläche 46 kann zudem eine Spule (nicht dargestellt) angeordnet sein, die an eine elektrische Energiequelle des Fahrzeugs, bspw. einen Fahrakku eines E-Bikes oder Pedelecs oder einen Stromgenerator eines Fahrrads, oder eine interne Energiequelle des Haltesystems 10, bspw. eine Batterie oder einen aufladbaren Akku, angeschlossen ist, sodass während der Benutzung des Haltesystems 10 ein berührungs- bzw. kabelloses induktives Aufladen des darin gehaltenen mobilen Endgeräts möglich ist, sofern das Endgerät über eine entsprechende Funktionalität verfügt. Das Laden erfolgt bevorzugt nach dem Qi-Standard. Es wäre außerdem denkbar, dass das Laden des Endgeräts automatisch gestartet wird, sobald der Aufnahmeabschnitt 16 mit der Haltevorrichtung 20 verriegelt ist. Ebenso wäre es denkbar, den Ladevorgang automatisch zu unterbrechen oder zu beenden, sobald der Aufnahmeabschnitt 16 von der Haltevorrichtung 20 entriegelt wird.

Ferner wäre es auch denkbar, dass das Haltesystem 10 eine bei an dem Fahrzeug montierter Position des Haltesystems 10 nach vorne in die Fahrtrichtung des Fahrzeugs leuchtende Lichtquelle, bspw. eine oder mehrere LEDs, aufweist, die für eine Ausleuchtung des Vorfelds und/oder eine bessere Sichtbarkeit des Fahrzeugs sorgt. Die Lichtquelle kann durch eine Energiequelle des Fahrzeugs oder eine interne Energiequelle mit Strom versorgt werden.

Schließlich wäre es auch denkbar, dass Dämpferelemente in die Haltevorrichtung 20 integriert sind, die für eine schwingungstechnische Entkopplung des mit der Haltevorrichtung 20 verriegelten Aufnahmeabschnitts 16 von der Befestigungsvorrichtung 22 bzw. für eine Entkopplung des Endgeräts von dem Fahrzeug sorgt. Motorvibrationen des Fahrzeugmotors, Stöße und Schläge von Fahrbahnunebenheiten u.a. werden dadurch nicht an das Endgerät weitergeleitet. Die Dämpferelemente können bspw. Lager aus einem elastischen Material, z.B. Gummi, oder Gelkissen umfassen.

## Patentansprüche

1. Haltesystem (10) zur lösbaren Befestigung eines mobilen Endgeräts oder dergleichen an einem Fahrzeug, das Haltesystem (10) umfassend
eine Haltevorrichtung (20) zur lösbaren Befestigung an dem Endgerät und
eine Befestigungsvorrichtung (22) zur vorzugsweise lösbaren Befestigung der Haltevorrichtung (20) an einem Bauteil (12) des Fahrzeugs, wobei
die Haltevorrichtung (20) ausgebildet ist, mit einem dem Endgerät zugeordneten Aufnahmeabschnitt (16) lösbar in Eingriff zu treten, und
die lösbare Befestigung des Endgeräts an der Haltevorrichtung (20) durch Drehen des dem Endgerät zugeordneten Aufnahmeabschnitts (16) relativ zu der Haltevorrichtung (20) in einer Drehebene zwischen einer Freigabeposition, in der der Aufnahmeabschnitt (16) in einer Einsetzrichtung (36) senkrecht zu der Drehebene auf die Haltevorrichtung (20) aufsetzbar oder in entgegengesetzter Richtung (38) von dieser abnehmbar ist, und einer Rastposition umschaltbar ist, in der der Aufnahmeabschnitt (16) mit der Haltevorrichtung (20) in Eingriff tritt,
**dadurch gekennzeichnet, dass** die Haltevorrichtung (20) umfasst:
ein an der Befestigungsvorrichtung (22) drehfest befestigtes Rastelement (40) mit mindestens zwei radial nach außen abstehenden und sich in der Drehebene erstreckenden Rastlaschen (42), und
ein an der Befestigungsvorrichtung (22) drehbar befestigtes Abdeckelement (44), das eine sich in der Drehebene erstreckende Abdeckfläche (46) mit einer Außenkontur (48) aufweist, wobei
das Abdeckelement (44) bei auf die Haltevorrichtung (20) aufgesetztem Aufnahmeabschnitt (16) zusammen mit dem Endgerät in der Drehebene drehbar ist, wobei
in der Freigabeposition die Abdeckfläche (46) des Abdeckelements (44), bei einem Blick auf das Abdeckelement (44) im Wesentlichen senkrecht zu der Abdeckfläche (46), die Rastlaschen (42) des Rastelements (40) zumindest größtenteils verdeckt und
in der Rastposition das Abdeckelement (44) die Rastlaschen (42) des Rastelements (40) zumindest teilweise freigibt, sodass, bei einem Blick auf das Abdeckelement (44) im Wesentlichen senkrecht zu der Abdeckfläche 46), die Rastlaschen (42) in radialer Richtung weiter über die Außenkontur (48) der Abdeckfläche (46) des Abdeckelements (44) hervorragen als in der Freigabeposition.

2. Haltesystem (10) nach Anspruch 1, **dadurch gekennzeichnet, dass** das Abdeckelement (44) entlang der Außenkontur (48) seiner Abdeckfläche (46) eine sich im Wesentlichen senkrecht zu der Abdeckfläche (46) erstreckende Außenumfangsfläche (50) mit seitlichen Aussparungen (52) aufweist, die derart ausgebildet und in der Außenumfangsfläche (50) angeordnet sind, dass die Rastlaschen (42) in der Rastposition zumindest teilweise durch die Aussparungen (52) des Abdeckelements (44) hindurch über die Außenkontur (48) der Abdeckfläche (46) hervorragen

3. Haltesystem (10) nach Anspruch 1 oder 2, **dadurch gekennzeichnet, dass** das Abdeckelement (44) derart ausgebildet ist, dass es in der Freigabeposition die Rastlaschen (42) des Rastelements (40) vollständig verdeckt, so dass sie für einen Betrachter bei einem Blick von außerhalb der Haltevorrichtung (20) senkrecht zur Drehebene nicht sichtbar sind.

4. Haltesystem (10) nach einem der vorhergehenden Ansprüche, **dadurch gekennzeichnet, dass** die Rastlaschen (42) ausgebildet sind, in der Rastposition mit dem dem Endgerät zugeordneten Aufnahmeabschnitt (16) in Eingriff zu treten und das Endgerät durch diesen Eingriff an der Haltevorrichtung (20) gehalten ist.

5. Haltesystem (10) nach einem der vorhergehenden Ansprüche, **dadurch gekennzeichnet, dass** der dem Endgerät zugeordnete Aufnahmeabschnitt (16) eine Aufnahmevertiefung (54) zur Aufnahme des Abdeckelements (44) in der Freigabeposition und in der Aufnahmevertiefung (54) sich in radialer Richtung erstreckende Taschen (56) aufweist, wobei die Rastlaschen (42) des Rastelements (40) in der Rastposition die Taschen (56) hintergreifen.

6. Haltesystem (10) nach Anspruch 5, **dadurch gekennzeichnet, dass** die Außenkontur (48) der Abdeckfläche (46) des Abdeckelements (44) einer Innenkontur (64) der Aufnahmevertiefung (54) des Aufnahmeabschnitts (16) entspricht.

7. Haltesystem (10) nach einem der vorhergehenden Ansprüche, **dadurch gekennzeichnet, dass** das Haltesystem (10) ein an der Befestigungsvorrichtung (22) drehfest befestigtes Federelement (66) aufweist, das während einer Drehbewegung (62) des Abdeckelements (44) mit diesem zusammenwirkt, so dass das Abdeckelement (44) relativ zu dem Rastelement (40) in diskreten Drehpositionen lösbar gehalten ist.

8. Haltesystem (10) nach Anspruch 7, **dadurch gekennzeichnet, dass** die diskreten Drehpositionen des Abdeckelements (44) relativ zu dem Rastelement (40) zumindest die Freigabeposition und die Rastposition umfassen.

9. Haltesystem (10) nach Anspruch 7 oder 8, **dadurch gekennzeichnet, dass** das Federelement (66) zusammen mit dem Rastelement (40) als ein kombiniertes Bauteil (40, 66) ausgebildet ist.

10. Haltesystem (10) nach einem der Ansprüche 7 bis 9, **dadurch gekennzeichnet, dass** das Federelement (66) eine Flächenerstreckung in der Drehebene aufweist und mindestens eine sich in radialer Richtung erstreckende und quer zur Drehebene wirkende Federlasche (68) aufweist, die mit mindestens einem entsprechenden dem Abdeckelement (44) zugeordneten diskreten Abschnitt (70) zusammenwirkt, wenn sich das Abdeckelement (44) in einer der diskreten Drehpositionen befindet, sodass das Abdeckelement (44) in der diskreten Drehposition lösbar gehalten ist.

11. Haltesystem (10) nach einem der Ansprüche 7 bis 10, **dadurch gekennzeichnet, dass** das Federelement (66) vier sich in einem Winkel von 90° versetzt zueinander in radialer Richtung erstreckende und quer zur Drehebene wirkende Federlaschen (68) aufweist, die mit vier entsprechenden dem Abdeckelement (44) zugeordneten diskreten Abschnitten (70) zusammenwirken, wenn sich das Abdeckelement (44) in einer der diskreten Drehpositionen befindet, und die das Abdeckelement (44) in der diskreten Drehposition lösbar halten.

12. Haltesystem (10) nach Anspruch 10 oder 11, **dadurch gekennzeichnet, dass** die mindestens eine Federlasche (68) an ihrem distalen Ende einen Rastnocken (72) aufweist, und dass der mindestens eine dem Abdeckelement (44) zugeordnete diskrete Abschnitt (70) eine auf einer dem Federelement (66) zugewandten Seite des Abdeckelements (44) ausgebildete Rastvertiefung (74) aufweist, mit der der Rastnocken (72) in Eingriff tritt, wenn sich das Abdeckelement (44) in einer der diskreten Drehpositionen befindet.

13. Haltesystem (10) nach einem der vorhergehenden Ansprüche, **dadurch gekennzeichnet, dass** das Haltesystem (10) ein Halteelement (80) aufweist, das drehfest an der Befestigungsvorrichtung (22) befestigt ist, wobei das Rastelement (40) und/oder das Federelement (66) an dem Halteelement (80) drehfest befestigt ist.

14. Haltesystem (10) nach Anspruch 13, **dadurch gekennzeichnet, dass** das Abdeckelement (44) an dem Rastelement (40) und/oder an dem Federelement (66) drehbar befestigt ist.

15. Aufnahmeabschnitt (16), der einem mobilen Endgerät oder dergleichen zugeordnet und zum Zusammenwirken mit einem Haltesystem (10) zur lösbaren Befestigung des mobilen Endgeräts an einem Fahrzeug ausgebildet ist, um das Endgerät lösbar an einem Bauteil (12) des Fahrzeugs zu befestigen,
**dadurch gekennzeichnet, dass**
der Aufnahmeabschnitt (16) ausgebildet ist, mit einem Haltesystem (10) nach einem der vorhergehenden Ansprüche zusammenzuwirken.

16. Aufnahmeabschnitt (16) nach Anspruch 15, **dadurch gekennzeichnet, dass** der Aufnahmeabschnitt (16) eine Aufnahmevertiefung (54) aufweist, in die ein Abdeckelement (44) des Haltesystems (10) einsetzbar ist, wobei insbesondere eine Innkontur (64) der Aufnahmevertiefung (54) einer Außenkontur (48) des Abdeckelements (44) entspricht, so dass das Abdeckelement (44) formschlüssig in die Aufnahmevertiefung (54) einsetzbar ist.

17. Aufnahmeabschnitt (16) nach Anspruch 15 oder 16, **dadurch gekennzeichnet, dass** der Aufnahmeabschnitt (16) sich in einer Aufnahmevertiefung (54) in radialer Richtung erstreckende Taschen (56) aufweist, die zur Aufnahme von Rastlaschen (42) eines an einer Befestigungsvorrichtung (22) des Haltesystems (10) drehfest befestigten Rastelements (40) ausgebildet sind, wenn der Aufnahmeabschnitt (16) in einer Einsetzrichtung (36) auf ein Abdeckelement (44) des Haltesystems (10) aufgesetzt ist und der Aufnahmeabschnitt (16) in einer senkrecht zu der Einsetzrichtung (36) verlaufenden Drehebene von einer Freigabeposition, in der der Aufnahmeabschnitt (16) in der Einsetzrichtung (36) auf das Abdeckelement (44) aufsetzbar oder in entgegengesetzter Richtung (38) von diesem abnehmbar ist, in eine Rastposition gedreht ist, in der der Aufnahmeabschnitt (16) mit dem Rastelement (40) in Eingriff steht.

18. Aufnahmeabschnitt (16) nach einem der Ansprüche 15 bis 17, **dadurch gekennzeichnet, dass** der Aufnahmeabschnitt (16) als ein von dem mobilen Endgerät separates Bauteil ausgebildet ist, das an dem mobilen Endgerät befestigbar ist, insbesondere als Bestandteil einer Schutzhülle für das Endgerät.
